# EUROPÄISCHE PATENTSCHRIFT

(11) **EP 1 890 925 B1**
(45) Veröffentlichungstag und Bekanntmachung des Hinweises auf die Patenterteilung: **05.05.2010**
(21) Anmeldenummer: 06725229.6
(22) Anmeldetag: 22.03.2006
(51) Int. Cl.: B62D 3/12, B62D 5/22

(54) **ZAHNSTANGENLENKUNG MIT ANGESCHWEISSTEN LEITUNGEN**
RACK-AND-PINION STEERING WITH LINES WELDED THERETO
DIRECTION A CREMAILLERE POURVUE DE CONDUITES SOUDEES

(30) Priorität: 24.03.2005 EP 05102426
(43) Veröffentlichungstag der Anmeldung: 27.02.2008
(73) Patentinhaber: SchmitterGroup AG, 97289 Thüngen (DE)
(72) Erfinder: GÜNTHER, Friedhelm, 44359 Dortmund (DE)
(74) Vertreter: Götz, Georg Alois
(86) Internationale Anmeldenummer: PCT/EP2006/060946
(87) Internationale Veröffentlichungsnummer: WO 2006/100261

(56) Entgegenhaltungen:
- EP-A- 0 147 069
- DE-A1-102004 012 405
- GB-A- 1 297 621

## Beschreibung

Die vorliegende Erfindung bezieht sich auf eine Zahnstangenlenkung mit hydraulischer Hilfskraftunterstützung, insbesondere für Kraftfahrzeuge, gemäß Oberbegriff des Anspruchs 1.

Beim Erwerb von Kraftfahrzeugen stehen heute für den Kunden auch die Verbrauchseigenschaften im Vordergrund der Kaufentscheidung. Ein Kraftfahrzeug mit günstigen Verbrauchseigenschaften ist daher für die Modellentwicklung ein wichtiges Ziel. Ein Schritt der Verbesserung des Kraftstoffverbrauchs liegt in der Optimierung des Gewichts des Kraftfahrzeugs. Dazu ist es sinnvoll, alle Bauteile des KFZ einer Optimierung des Gewichts zu unterziehen. Weiterhin ist durch die immer komplexer werdende Motortechnik und die damit verbundene Zunahme an Bauteilen und Bauelementen die Raumausnutzung im Motorraum von immer größerer Bedeutung. Eine kompakte, raumsparende Ausführung der Bauelemente im Motorraum ist daher wünschenswert.

Für den hydraulischen Antrieb einer hydraulisch angetriebenen Hilfskraftlenkung ist es notwendig, dass Hydrauliköl durch Zu- und Ableitungen in das Zahnstangengehäuse, das als Arbeitskolben für die Hydraulik dient, geleitet wird. Zusätzlich existieren im Allgemeinen noch Luftausgleichsleitungen.

Im Stand der Technik werden diese Leitungen mit Stauchköpfen und Dichtungen versehen. Am Gehäuse werden Stutzen angeschweißt, mit denen die Leitungen dann verschraubt und abgedichtet werden. Diese Befestigungsweise ist nachteilig, weil durch die Notwendigkeit des Verschraubens und Abdichtens zusätzlicher Montageaufwand notwendig wird. Dazu erhöhen die zwingend notwendigen Stutzen und Befestigungsmittel das Gesamtgewicht der Zahnstangenlenkung. Auch benötigen die Stutzen und Befestigungsmittel für die Leitungen zusätzlichen Platz, was dem Ziel einer möglichst kompakten Ausführung, die Einbauraum spart, entgegensteht.

Aus der EP 0 147 069 A2 ist eine Zahnstangenlenkung bekannt, die ein rohrförmiges Stahlgehäuse aufweist, wobei ein Gehäuseabschnitt einen integrierten hydraulischen Arbeitszylinder aufweist und gehäuseexterne Leitungen zur Zuleitung und Ableitung einer hydraulischen Druckflüssigkeit direkt an Anschlüsse, die in dem Arbeitszylinder ausgebildet sind, angeschweißt sein können.

Die GB 1 297 621 offenbart ein Gehäuse für eine Zahnstangenlenkung mit Anschlussleitungen zum Transport eines hydraulischen Fluids und mit Anschlussleitungen zum Luftdruckausgleich in den Faltenbälgen. Diese Anschlussleitungen sind in Stutzen am Gehäuse der Zahnstangenlenkung angebracht, wobei die GB 1 297 621 die Art der Anbringung nicht weiter offenbart.

Es ergibt sich also die Aufgabe der Erfindung, eine Zahnstangenlenkung mit einem optimierten Gewicht bei gleichzeitig kostengünstiger Herstellung zur Verfügung zu stellen, die eine kompakte, raumsparende Ausführung möglich macht. Diese Aufgabe wird durch die Zahnstangenlenkung nach Anspruch 1 erfüllt.

Im Rahmen der allgemeinen Erfindungsidee wird vorgeschlagen, die Öl- und Luftausgleichsleitungen direkt mit dem Gehäuse zu verschweißen. Dadurch werden keine Dichtungen und Stauchköpfe benötigt, auch die Stutzen können eingespart werden. Auf diese Weise kann Gewicht vermieden werden.

Das Gehäuse einer Zahnstangenlenkung ist ein im Wesentlichen rohrförmiges Gebilde, in dessen Inneren sich die Zahnstange, gestützt durch Lager, in axialer Richtung bewegen kann. Angetrieben wird die Zahnstange durch eine Lenkstange mit daran befestigtem oder integriertem Ritzel, das mittels einer Passdurchgangsbohrung und entsprechender Gehäuseerweiterung mit den Zähnen der Zahnstange in Engriff gebracht wird. Die Aufgabe des Gehäuses ist es, die Zahnstange und das Lenkgetriebe vor Verschmutzung zu schützen und die auf Lenkung und Zahnstange wirkenden Kräfte aufzunehmen und in das Fahrzeugchassis oder die Karosserie abzuleiten. Bei Hilfskraftlenkungen, die hydraulisch angetrieben werden, dient das Gehäuse oft auch als Kolbengehäuse für das verwendete Hydrauliköl.

Die Druckleitungen, die dass für die hydraulische Unterstützung der Lenkbewegung notwendige Fluid transportieren, können direkt an das Lenkungsgehäuse angeschweißt werden, anstatt wie im Stand der Technik üblich mittels Stutzen und Dichtungen angeschraubt zu werden. Durch das direkte Anschweißen der Leitungen einer hydraulisch unterstützten Hilfskraftlenkung können zum einen die Leitungen deutlich näher am Gehäuse verlegt werden, da der Stutzen als zusätzlicher Abstandhalter wegfallen kann, und zum anderen wird durch den Verzicht auf den Stutzen weiteres Gewicht eingespart, was zur Optimierung des Kfz-Gewichts beträgt. Aber auch der Montageaufwand verringert sich, da die Verbindung mittels Schweißen einfacher, schneller und mit größerer Dichtigkeit durchgerührt werden kann. Zusätzlich entfällt bei der Verwendung angeschweißter Druck- und Luftausgleichsleitungen die Notwendigkeit, sämtliche Einzelteile des Lenkungsgehäuses separat gegen Korrosion zu beschichten. Das Rohgehäuse mit den angeschweißten Leitungen kann vielmehr in einem Arbeitsgang komplett galvanisch beschichtet werden. Damit werden nicht nur Arbeitsgänge eingespart, es wird auch zuverlässig verhindert, dass die Oberflächenbeschichtung im Rahmen von Montagearbeiten der Leitungen am Lenkstangengehäuse beschädigt wird, so dass die Gefahr von korrosionsbedingten Fehlern reduziert wird. Als Beschichtung bietet sich eine Cr-6-freie galvanische Oberflächenbeschichtung an.

Als Schweißverfahren für die Befestigung der Leitungen an einer Zahnstangenlenkungsgehäuse kommt vorzugsweise ein Widerstandspreßschweißverfahren zum Einsatz. Hierbei werden die beiden Werkstücke durch Stromfluß und hohen Anpressdruck miteinander verschweißt. Vorteilhaft bei diesem Schweißverfahren ist gegenüber Schweißverfahren wie beispielsweise Lichtbogenschweißen die vergleichsweise geringe Einbrandtiefe und damit eine geringe Beeinflussung der Festigkeit des Materials. Aber auch andere Schweißverfahren wie Kondensatorentladungsschweißen oder Laserschweißen sind denkbar.

Die folgenden Figuren zeigen einige beispielhafte Ausführungsformen der Erfindung. Dabei zeigen:
- Fig. 1: Einen Längsschnitt durch eine erfindungsgemäße Zahnstangenlenkung mit dickeren und dünneren Gehäusewänden und einer direkt angeschweißten Ölleitung
- Fig. 2: Eine ungeschnittene Darstellung der Zahnstangenlenkung aus Fig. 1
- Fig. 3: Eine alternative Ausführungsform einer erfindungsgemäßen Zahnstangenlenkung mit angeschweißten Druckleitungen und Luftausgleichsleitungen
- Fig. 4: Eine weitere alternative Ausführungsform einer erfindungsgemäßen Zahnstangenlenkung mit angeschweißtem Druckleitungen und Luftausgleitchsleitungen sowie einem Flansch zur Befestigung eines Flanschventils.

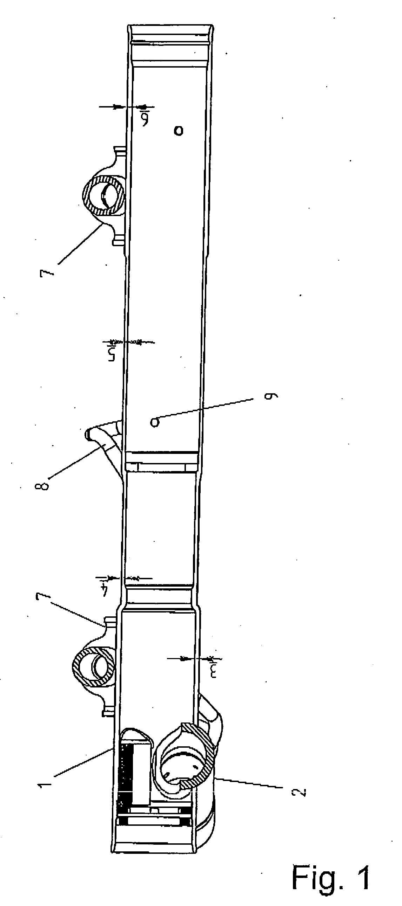

In Fig. 1 ist eine erfindungsgemäße Zahnstangenlenkung mit einem Gehäuse 1 und einer Gehäuseerweiterung 2 dargestellt. Im Bereich der Gehäuseerweiterung 2 weist die Gehäusewand des Gehäuses 1 die Wandstärke 3 auf. Da durch die Gehäuseerweiterung 2 im Bereich eines Passdurchgangs zwischen Gehäuseerweiterung 2 und Gehäuse 1 die von der Lenkeinrichtung gedrehte Welle mit Zähnen in die komplementären Zähne der Zahnstange im Zahnstangenlenkungsgehäuse in Eingriff gebracht wird, können auf die Gehäusewand im Bereich der Gehäuseerweiterung 2 nicht unerhebliche Kräfte eingeleitet werden. Damit diese Kräfte aufgenommen werden können, ist das Gehäuse in diesem Bereich mit der dickeren Wandstärke 3 ausgeführt. Eine zusätzliche Krafteinleitung kann durch eine Befestigungsvorrichtung 7 bedingt sein, die ebenfalls die größere Wandstärke 3 in diesem Bereich bedingt. Vorzugsweise ist die Wandstärke in allen Bereichen des Gehäuses über den Gehäusequerschnitt in Gehäusequerrichtung konstant gehalten. Im Verlauf der Längsrichtung ändert sich die Wandstärke zur dünneren Wandstärke 4, dann nach einem kleinen Sprung im Gehäusewandverlauf zur Wandstärke 5, die gleich mit der Wandstärke 4 sein kann, aber nicht sein muss. Da im Bereich der Wandstärken 4 und 5 keine Krafteinleitungspunkte vorhanden sind, kann die Wandstärke hier reduziert werden, ohne dass es zu Stabilitätsproblemen kommt. Im weiteren Verlauf findet mit der Annäherung an eine Befestigungsvorrichtung 7 eine weitere Wandstärkenänderung zur Wandstärke 6 statt. Diese kann gleich der Wandstärke 3 sein, aber je nach Erfordernis auch kleiner oder größer. Außen am Gehäuse verläuft die Ölleitung 8, die im Bereich der Bohrung 9 direkt mit dem Gehäuse verschweißt ist.

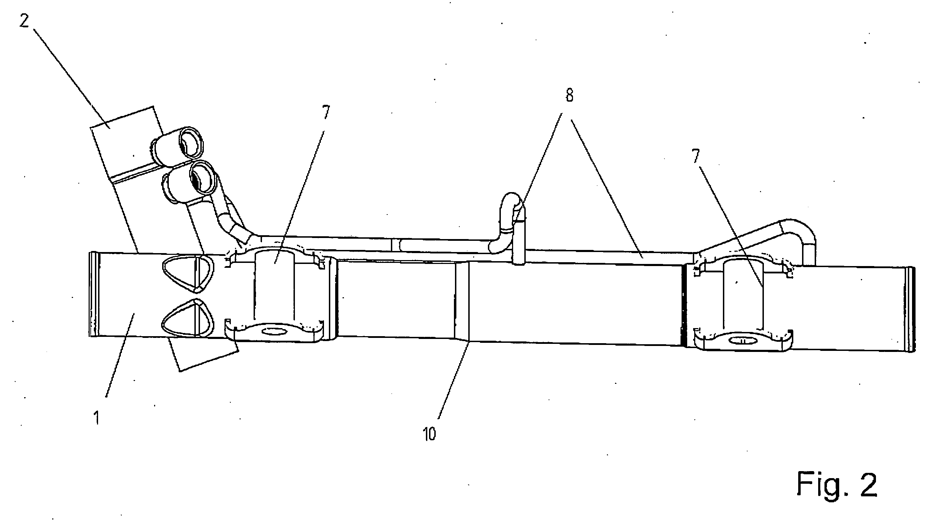

Fig. 2 zeigt das Gehäuse aus Fig. 1 von außen im geschlossenen Zustand. Im mittleren Bereich ist die Gehäuseumfangsänderung 10 zu erkennen. Mit der Gehäuseumfangsänderung kann auch die Wandstärke geändert werden, sie kann aber auch gleich bleiben. Die verschweißten Leitungen 8 können vorteilhaft nahe am Gehäuse geführt werden und ermöglichen so eine kompakte Ausführung der gesamten Zahnstangenlenkung. Im Bereich der Befestigungshalter 7 und der Gehäuseerweiterung 2 sind Umfangsänderungen des Gehäuseumfangs zu erkennen, die in diesen Bereichen mit einer Wandstärkenerhöhung einhergeht. Um den Fertigungsaufwand möglichst niedrig zu halten, sind die einzelnen Komponenten der Zahnstangenlenkung, dass heißt, Gehäuse 1 und Gehäuseerweiterung 2, vorzugsweise jeweils einstückig ausgeführt. Mit einer Fertigung aus einem einheitlichen Material, vorzugsweise Stahl beispielsweise in der Stahlgüte RST37 können die Kosten weiter niedrig gehalten werden und überdies Korrosionsprobleme durch Bildung von Lokalelementen vermieden werden.

Die direkt verschweißten Ölleitungen 8 dienen der Hilfskraftunterstützung beim Lenken mittels einer hydraulischen Servoeinheit. Durch diese Leitungen wird eine Servoflüssigkeit im Arbeitskolbenbereich der Zahnstangenlenkung bewegt, mit der ein entsprechender Unterstützungsdruck zur leichteren Bewegung der Lenkung aufgebaut wird.

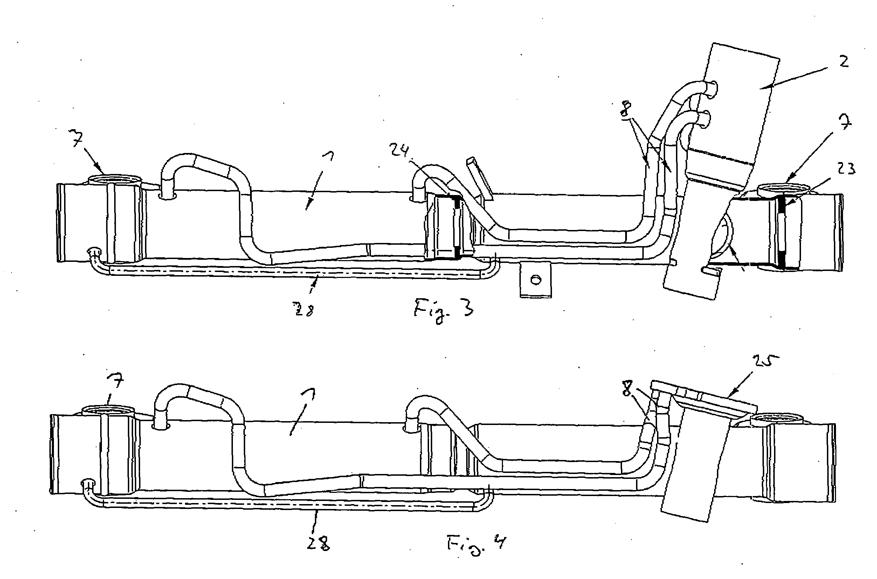

Figur 3 zeigt eine Zahnstangenlenkung mit direkt verschweißten Druck- und Luftausgleichsleitungen. Am Gehäuseteil 1, der aus einem umgeformten Präzisionsrohrabschnitt besteht, ist die Luftausgleichsleitung 28, die für den Druckausgleich zwischen den Faltenbalgen benötigt wird, direkt am Gehäuse 1 angeschweißt. Die Luftausgleichsleitung 28 überbrückt also den Bereich des Gehäuses 1, der als Arbeitskolben für die hydraulische Hilfskraftunterstützung dient. Dieser ist durch eine im Dichtungshalter 24 befestigte Dichtung gegenüber einem Gasdurchtritt abgedichtet. Vom Arbeitskolbenbereich des Gehäuses 1 führen zwei Druckleitungen für das Hydraulikfluid zur Gehäüseerweiterung 2, die jeweils am Gehäuse 1 und an der Gehäuseerweiterung 2 direkt angeschweißt sind. In der Nähe der Gehäuseerweiterung 2 Richtung Ende des Gehäuses 1 befindet sich der Lenkanschlag 23, der die Lenkbewegung limitiert. Figur 4 zeigt eine prinzipiell identische Ausführungsform, die aber an der Gehäuseerweiterung 2 mit einem Flansch zur Befestigung eines Flanschventils für die Druckleitungen ausgestattet ist. Auch bei dieser Ausführungsform werden alle Leitungen am Gehäuse 1 beziehungsweise am Flansch 25 direkt verschweißt.

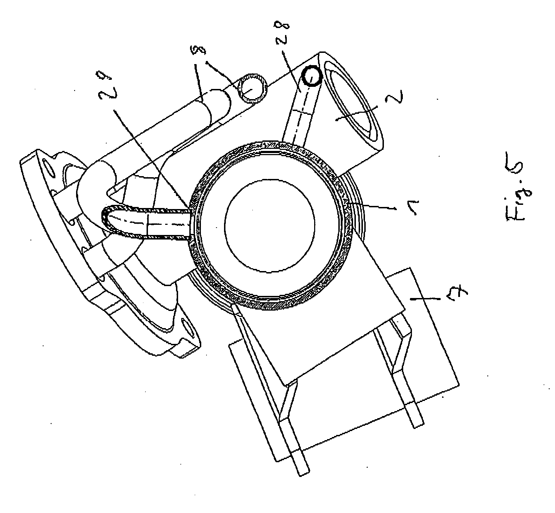

Fig. 5 zeigt einen Schnitt durch das Gehäuse 1 einer erfindungsgemäßen Zahnstangenlenkung im Bereich einer angeschweißten Leitung 8. Die Leitung 8 ist im Bereich 29 mit dem Gehäuse 1 verschweißt. Dabei "sitzt" die Leitung außen am Gehäuse auf, wobei das Gehäuse im Öffnungsbereich für die Leitung angefast sein kann. Durch den aufgesetzten Schweißbereich kann vorteilhaft ein Preßschweißverfahren eingesetzt werden, und damit die Einbrandtiefe im Außenbereich der Wand vom Gehäuse 1 gehalten werden. Das andere Ende der Anschlussleitung 8 ist am Flansch 25 festgeschweißt, der mit der Gehäuseerweiterung 2 verbunden ist. Der Befestigungshalter 7 und die Gehäuseerweiterung 2 sind ihrerseits mit dem Gehäuse 1 verbunden.

### Bezugszeichenliste

- 1: Gehäuse
- 2: Passdurchgangsbohrung mit Gehäuseerweiterung
- 3: Gehäusewand mit dickem Querschnitt
- 4: Gehäusewand mit dünnem Querschnitt
- 5: Gehäusewand mit dünnem Querschnitt
- 6: Gehäusewand mit dickem Querschnitt
- 7: Befestigungsvorrichtung für Verbindung zu Chassis/Karosserie
- 8: Direkt angeschweißte Ölleitung
- 9: Bohrung für direkt angeschweißte Ölleitung
- 10: Querschnittsänderung an der Gehäuseaussenseite
- 23: Lenkanschlag
- 24: Dichtungshalter
- 25: Flansch
- 28: Luftausgleichsleitung
- 29: Schweißbereich

## Patentansprüche

1. Zahnstangenlenkung, insbesondere für Kraftfahrzeuge, mit einem länglichen, vorzugsweise im wesentlichen rohrförmigen Gehäuse (1), das eine Zahnstange zur Führung umgibt, und mit mindestens einer Passdurchgangsbohrung mit einer Gehäuseerweiterung (2), in der ein Ritzel zum Antrieb der und/oder Eingriff in die Zahnstange über eine Lenkstange betätigt werden kann und die mit einer hydraulischen Hilfskraftunterstützung ausgestattet ist, wobei das Gehäuse (1) als Arbeitszylinder dient und mit Anschlussleitungen (8) zum Transport des hydraulischen Öls oder sonstigen hydraulischen Fluids und mit Anschlussleitungen (28) zum Luftdruckausgleich beispielsweise zu Faltenbalgen versehen ist, **dadurch gekennzeichnet, dass** die Anschlussleitungen (28) zum Luftdruckausgleich durch Schweißverbindungen direkt am Gehäuse (1) angebracht sind oder wobei alle Anschlussleitungen (8, 28) durch Schweißverbindungen direkt am Gehäuse (1) angebracht sind, und wobei das Gehäuse (1), die Gehäuseerweiterung (2) und sämtliche damit verbundenen Teile wie Leitungen (8, 28) und Befestigungseinrichtungen (7) eine Beschichtung aufweisen, die auf sämtliche Teile gemeinsam aufgebracht ist.

2. Zahnstangenlenkung nach Anspruch 1, **dadurch gekennzeichnet, dass** die Schweißverbindung mittels Widerstand-Pressschweißen, Laserschweißen oder Kondensator-Entladungsschweißen hergestellt ist.

3. Zahnstangenlenkung nach Anspruch 1 oder 2, **dadurch gekennzeichnet, dass** die Beschichtung eine Cr 6-freie galvanische Oberflächenbeschichtung ist.

## Claims

1. Rack-and-pinion steering, in particular for motor vehicles, having an elongate, preferably substantially tubular housing (1), which surrounds a rack for guiding, and having at least one fitting through-bore with a housing enlargement (2), in which a pinion for driving and/or engaging in the rack can be actuated via a steering rod and which is equipped with a hydraulic power-assisted support, wherein the housing (1) acts as a working cylinder and is equipped with connecting lines (8) for conveying the hydraulic oil or other hydraulic fluid and is provided with connecting lines (28) for air pressure compensation for example to expansion bellows, **characterised in that** the connecting lines (28) for air pressure compensation are mounted directly on the housing (1) by welded joints or wherein all connecting lines (8, 28) are mounted directly on the housing (1) by welded joints, and wherein the housing (1), the housing enlargement (2) and all parts connected thereto such as lines (8, 28) and fixing devices (7) have a coating, which is applied to all parts together.

2. Rack-and-pinion steering according to claim 1, **characterised in that** the welded joint is produced by means of resistance pressure welding, laser welding or capacitor discharge welding.

3. Rack-and-pinion steering according to claim 1 or 2, **characterised in that** the coating is a Cr6-free galvanic surface coating.

## Revendications

1. Direction à crémaillère, en particulier pour véhicule automobile, comportant un boîtier (1) de forme allongée, de préférence sensiblement tubulaire, qui entoure une crémaillère destinée au guidage, et comportant au moins un alésage traversant recevant un prolongement (2) du boîtier dans lequel peut être actionné un pignon destiné à entraîner la crémaillère et/ou à engrener dans la crémaillère par le biais d'une bielle de direction, et qui est équipé d'une assistance hydraulique, le boîtier (1) servant de vérin de travail et étant pourvu de conduites de raccordement (8) destinées au transport de l'huile hydraulique ou d'un autre fluide hydraulique, et de conduites de raccordement (28) destinées à une compensation de la pression d'air, par exemple, entre des soufflets, **caractérisée en ce que** les conduites de raccordement (28) destinées à une compensation de la pression d'air sont fixées par des raccords soudés directement au niveau du boîtier (1), ou **en ce que** toutes les conduites de raccordement (8, 28) sont fixées par des raccords soudés directement au niveau du boîtier (1), et **en ce que** le boîtier (1), le prolongement de boîtier (2) et toutes les pièces qui s'y raccordent, telles que les conduites (8, 28) et les dispositifs de fixation (7), présentent un revêtement qui est appliqué conjointement sur toutes les pièces.

2. Direction à crémaillère selon la revendication 1, **caractérisée en ce que** le raccord soudé est réalisé au moyen d'un soudage électrique par résistance, d'un soudage au laser ou d'un soudage par décharge de condensateurs.

3. Direction à crémaillère selon la revendication 1 ou 2, **caractérisée en ce que** le revêtement est un revêtement de surface galvanique exempt de Cr 6.
